# NEUE EUROPÄISCHE PATENTSCHRIFT

(11) **EP 2 035 484 B2**
(45) Veröffentlichungstag und Bekanntmachung des Hinweises auf die Entscheidung über den Einspruch: **29.07.2020**
(45) Hinweis auf die Patenterteilung: 27.09.2017
(21) Anmeldenummer: 07730108.3
(22) Anmeldetag: 13.06.2007
(51) Int. Cl.: C08G 75/23

(54) **VERFAHREN ZUR HERSTELLUNG VON POLYSULFONEN UND POLYETHERSULFONEN MIT VERRINGERTEM YELLOW INDEX**
PROCESS FOR THE PREPARATION OF POLYSULPHONES AND POLYETHER SULPHONES WITH REDUCED YELLOW INDEX
PROCÉDÉ DE FABRICATION DE POLYSULFONES ET POLYÉTHERSULFONES AYANT UN INDICE DE JAUNE RÉDUIT

(30) Priorität: 22.06.2006 EP 06115900
(43) Veröffentlichungstag der Anmeldung: 18.03.2009
(73) Patentinhaber: BASF SE, 67056 Ludwigshafen am Rhein (DE)
(72) Erfinder: DIENES, Christian, 76829 Landau (DE); KRÜGER, Marco, 68161 Mannheim (DE); MÜSSIG, Stefan, 68163 Mannheim (DE); ERBES, Jörg, 76137 Karlsruhe (DE); STAMMER, Achim, 67251 Freinsheim (DE); WEBER, Martin, 67487 Maikammer (DE); WASSMER, Karl-Heinz, 67112 Mutterstadt (DE); LANGE, Gerhard, 69198 Schriesheim (DE)
(74) Vertreter: Baier, Martin
(86) Internationale Anmeldenummer: PCT/EP2007/055797
(87) Internationale Veröffentlichungsnummer: WO 2007/147759

(56) Entgegenhaltungen:
- EP-A- 0 135 130
- EP-A- 0 313 948
- WO-A-03/089519
- WO-A-03/089520
- US-A- 4 108 837

## Beschreibung

Die vorliegende Erfindung betrifft ein Verfahren zur Herstellung von Polysulfonen mit einem Yellowness Index nach DIN 6167 von kleiner 19 und Polyethersulfonen mit einem Yellowness Index nach DIN 6167 von kleiner 30.

Polyethersulfone und Polysulfone gehören zur Gruppe der Hochleistungsthermoplaste und zeichnen sich durch hohe Wärmeformbeständigkeit, gute mechanische Eigenschaften und inhärente Flammwidrigkeit aus (E.M. Koch, H.-M. Walter, Kunststoffe 80 (1990) 1146; E. Döring, Kunststoffe 80, (1990) 1149). Aufgrund ihrer guten Bioverträglichkeit werden Polyethersulfone und Polysulfone auch als Material zur Herstellung von Dialysemembranen verwendet (S. Savariar, G.S. Underwood, E.M. Dickinson, P.J. Schielke, A.S. Hay, Desalination 144 (2002) 15).
Die Herstellung der Polyethersulfone und Polysulfone erfolgt üblicherweise durch Polykondensation geeigneter Monomerbausteine in dipolar-aprotischen Lösungsmitteln bei erhöhter Temperatur (R.N. Johnson et.al., J.Polym. Sci. A-1 5 (1967) 2375, J.E. McGrath et.al., Polymer 25 (1984) 1827).
Die Herstellung von Polyarylenethersulfonen aus geeigneten aromatischen Bishalogensulfonen und aromatischen Bisphenolen oder deren Salzen in Gegenwart mindestens eines Alkalimetall- oder Ammoniumcarbonats oder-hydrogencarbonats in einem aprotischen Lösungsmittel werden beispielsweise in US 4 870 153 , EP 113 112, EP-A 297 363 und EP-A 135 130 beschreiben.

All diese in der Literatur beschriebenen Herstellverfahren liefern Polyethersulfone und Polysulfone, die hinsichtlich ihrer optischen Eigenschaften nicht vollends zufriedenstellen. So führen die literaturbekannten Verfahren zu Produkten mit einem unbefriedigend hohen Yellowness Index nach DIN 6167 von über 30. Weiterhin weisen die literaturbekannten Produkte eine Transmission, gemessen nach ASTM D 1003 von weniger als 85% und eine Trübung, gemessen nach dem gleichen Verfahren von deutlich über 3% auf.
Der vorliegenden Erfindung lag demnach die Aufgabe zugrunde ein Verfahren zur Herstellung von verbesserten Polyethersulfonen und Polysulfonen, die die obengenannten Nachteile nicht aufweisen, zu finden.

Überraschenderweise wurde die Aufgabe dadurch gelöst, dass die Polymerisation in basischen, aprotischen Lösungsmitteln unter Verwendung eines wandgängigen, zwangsfördernden Rührers durchgeführt wird.
Die Polymerisation in Gegenwart gegebenenfalls eines Alkalimetall- oder Ammoniumcarbonats oder -hydrogencarbonats und in einem aprotischen Lösungsmittel wird beispielsweise in US 4 870 153 , EP 113 112, EP-A 297 363, EP 347 669 und EP-A 135 130, auf die an dieser Stelle ausdrücklich Bezug genommen wird, ausführlich beschrieben. Insbesondere können diesen Schriften beispielsweise geeignete Ausgangsprodukte, Katalysatoren und Lösungsmittel, geeignete Mengenverhältnisse der beteiligten Stoffe und geeignete Reaktionszeiten und -parameter wie Reaktionstemperaturen oder-drucke sowie geeignete Aufarbeitungsmethoden entnommen werden. Als Rührer werden in den obengenannten Literaturstellen zumeist Kreuzbalkenrührer oder Propellerrüher mit Stromstörern während der Polymerisation, die nicht wandgängig oder zwangsfördernd sind, eingesetzt. Allenfalls bei der Aufarbeitung der Polymerisationsmassen werden z.T. wandgängige Ankerrührer wie beispielsweise in der EP 937749 beschrieben, verwendet.
Im erfindungsgemäßen Verfahren werden wandgängige und zwangsfördernde Rührer während der Polymerisation eingesetzt. Als wandgängige und zwangsfördernde Rührer werden Ankerrührer, die verschränkt sind, d.h. angestellte Rührblätter aufweisen, eingesetzt. Es werden die von M. Zlokarnik in Rührtechnik-Theorie und Praxis, 1999, S. 6 beschriebenen Wendelrührer verwendet. Es werden die sogenannten Seba-Rührer oder Paravisc-Rührer der Fa. Ekato - wie sie beispielsweise in der DE 4219 733, G 9208095.2, G 9208094.4 und G 9208096.0 und Handbuch der Rührtechnik, 2. Ausgabe 2000, S. 85 beschrieben sind, eingesetzt. Erfindungsgemäss werden zwangsfördernde Rührer mit d/D > 0.9 eingesetzt.
Die Verwendung wandgängiger und zwangsfördernder Rührer im erfindungsgemäßen Verfahren führt nicht nur zu der beschriebenen Eigenschaftverbesserung der Polyethersulfone und Polysulfone. Ein weiterer Vorteil des erfindungsgemäßen Verfahrens liegt in der Verkürzung der Reaktionszeit und der Möglichkeit die Reaktion konzentrierter zu fahren, begründet. Das erfindungsgemäße Verfahren zeichnet sich durch eine hohe Verfahrensökonomie und Prozessfähigkeit aus.

### Beispiele

### a) Herstellung des Polysulfons bzw. Polyethersulfons

In einen 4L-Reaktor mit Innenthermometer, Gaseinleitungsrohr, Rückflusskühler mit Wasserabscheider wurden die getrockneten Monomere, 1) Dichlordiphenylsulfon und Bisphenol A bzw. 2) Dichlordiphenylsulfon und Dihydroxydiphenylsulfon in äquimolarer Menge zusammen mit getrocknetem Kaliumcarbonat unter Stickstoffatmosphäre vorgelegt, unter Rühren in N-Methylpyrrolidon (NMP) gelöst und auf 190 °C aufgeheizt. Das Reaktionswasser wurde abdestilliert und der Füllstand durch Zufügen von NMP während der Reaktion konstant gehalten. Die Reaktion wurde durch Verdünnung mit kaltem NMP abgebrochen, anschließend wurde bei 140°C für 45 Minuten Methylchlorid (10l/h) in den Ansatz eingeleitet (45 Minuten). Danach wurde Stickstoff eingeleitet (20 l/h) und der Ansatz abgekühlt. Das entstandene Kaliumchlorid wurde abfiltriert und die Polymerlösung in Wasser gefällt. Die Polymerviskosität wurde mit der Viskositätszahl (VZ / ml/g) beurteilt. Die Viskositätszahl der Polyethersulfone und Polysulfone wurde in 1 %-iger Lösung von NMP bei 25°C bestimmt.

### b) Herstellung und optische Eigenschaften der Formkörper

Zur Beurteilung der optischen Eigenschaften der Produkte wurden spritzgegossene Probekörper (Rundscheiben, Durchmesser 60 mm, Dicke 2 mm) bei einer Massetemperatur von 310°C (für PSU) bzw. 350°C (für PES) und einer Werkzeugtemperatur von 140°C hergestellt. Die Messung der Transmission und Trübung (Haze) erfolgte nach ASTM D 1003, die Eigenfarbe der Produkte wurde anhand des Yellowness Index (YI) nach DIN 6167 bestimmt.

Die Ergebnisse der Prüfungen betreffend Polysulfon PSU sind in Tabelle 1 aufgeführt. Die Ergebnisse der Prüfungen betreffend Polyethersulfon PES sind in Tabelle 2 aufgeführt.

**Tabelle 1: PSU-Polymerisationsversuche mit unterschiedlichem Rührer**

| Versuch | 1 | 2 | V3 | V4 |
|---|---|---|---|---|
| Rührer: | verschränkter Ankerrührer | Paravisc** | Kreuzbalken/ Stromstörer | Propellerrührer |
| FG* | 60% | 60% | 60% | 60% |
| Abbruchzeit (Stunden) | 5 | 5 | 5 | 9 |
| VZ [ml/g] | 62 | 63 | 59 | 63 |
| Transmission [%] | 89 | 88 | 86 | 84 |
| Haze [%] | 1,5 | 1,5 | 3 | 4,5 |
| YI | 14 | 13 | 19 | 26 |
| *): Der Feststoffgehalt (FG) ist definiert als Masse der Feststoffe (Monomere und Kaliumcarbonat) bezüglich der Masse des Gesamtansatzes. | | | | |
| **) Paravisc-Rührer, Ekato, Handbuch der Rührtechnik, 2. Ausgabe 2000, S.85. Paravisc und verschränkter Ankerrührer sind wandgängige und zwangsfördernde Rührer (s. Beispiele 1 und 2), die übrigen nicht (s. Vergleichsbeispiele V3 und V4). | | | | |

Die Ausbeute betrug in allen Versuchen mehr als 98 % der Theorie

**Tabelle 2: PES-Polymerisationsversuche mit unterschiedlichem Rührer**

| Versuch | 5 | 6 | V7 | V8 |
|---|---|---|---|---|
| Rührer: | verschränkter Ankerrührer | Paravisc | Kreuzbalken/ Stromstörer | Propellerrührer |
| FG* | 55% | 55% | 55% | 55% |
| Abbruchzeit (Stunden) | 7 | 7 | 7 | 13 |
| VZ [ml/g] | 75 | 77 | 68 | 76 |
| Transmission [%] | 86 | 85 | 84 | 81 |
| Haze [%] | 2,5 | 2,5 | 4,5 | 7 |
| YI | 23 | 24 | 31 | 41 |

Paravisc und verschränkter Ankerrührer sind wandgängige und zwangsfördernde Rührer (s. Beispiele 5 und 6), die übrigen nicht (s. Vergleichsbeispiele V7 und V8).

Die Ausbeute betrug in allen Versuchen mehr als 98 % der Theorie

## Patentansprüche

1. Verfahren zur Herstellung von Polysulfonen mit einem Yellowness Index nach DIN 6167 von kleiner 19 und Polyethersulfonen mit einem Yellowness Index nach DIN 6167 von kleiner 30, **dadurch gekennzeichnet, dass** die Polymerisation in basischen, aprotischen Lösungsmitteln unter Verwendung eines wandgängigen, zwangsfördernden Rührers mit d/D > 0.9 durchgeführt wird, **dadurch gekennzeichnet, dass** ein verschränkter Ankerrührer, ein Wendelrührer, ein Seba-Rührer oder ein Paravisc-Rührer verwendet wird.

2. Verfahren nach Anspruch 1, **dadurch gekennzeichnet, dass** als Lösungsmittel NMP, NEP, Sulfolan, DMF, DMAC und/oder DMSO eingesetzt wird.

3. Verfahren nach Anspruch 1, **dadurch gekennzeichnet, dass** als Rührer ein Seba-rührer verwendet wird.

4. Verfahren nach den Ansprüchen 1 bis 3, **dadurch gekennzeichnet, dass** die Transmission nach ASTM D 1003 größer oder gleich 85% ist.

5. Verfahren nach den Ansprüchen 1 bis 4, **dadurch gekennzeichnet, dass** die Trübung nach ASTM D 1003 unter 3 % liegt.

## Claims

1. A process for the preparation of polysulfones having a yellowness index according to DIN 6167 of less than 19 and polyether sulfones having a yellowness index according to DIN 6167 of less than 30, wherein the polymerization is carried out in basic, aprotic solvents with the use of a positively conveying stirrer having d/D > 0.9 and passing close to the wall, wherein a crossed anchor stirrer, a helical stirrer, a Seba stirrer or a Paravisc stirrer is used.

2. The process according to claim 1, wherein the solvent used is NMP, NEP, sulfolane, DMF, DMAC and/or DMSO.

3. The process according to claim 1, wherein the stirrer used is a Seba stirrer.

4. The process according to any of claims 1 to 3, wherein the transmittance accoding to ASTM D 1003 is greater than or equal to 85%.

5. The process according to any of claims 1 to 4, wherein the haze according to ASTM D 1003 is less than 3%.

## Revendications

1. Procédé de fabrication de polysulfones ayant un indice de jaunissement selon DIN 6167 de moins de 19 et de polyéther-sulfones ayant un indice de jaunissement selon DIN 6167 de moins de 30, **caractérisé en ce que** la polymérisation est réalisée dans des solvants aprotiques basiques en utilisant un agitateur à déplacement forcé en contact avec la paroi avec d/D > 0,9, **caractérisé en ce qu'**un agitateur à ancre croisé, un agitateur hélicoïdal, un agitateur Seba ou un agitateur Paravisc est utilisé.

2. Procédé selon la revendication 1, **caractérisé en ce que** de la NMP, de la NEP, du sulfolane, du DMF, du DMAC et/ou du DMSO sont utilisés en tant que solvant.

3. Procédé selon la revendication 1, **caractérisé en ce qu'**un agitateur Seba est utilisé en tant qu'agitateur.

4. Procédé selon les revendications 1 à 3, **caractérisé en ce que** la transmission selon ASTM D 1003 est supérieure ou égale à 85 %.

5. Procédé selon les revendications 1 à 4, **caractérisé en ce que** le trouble selon ASTM D 1003 est inférieur à 3 %.
